# FASCICULE DE BREVET EUROPEEN

(11) **EP 0 669 222 B1**
(45) Date de publication et mention de la délivrance du brevet: **01.04.1998**
(21) Numéro de dépôt: 95400326.5
(22) Date de dépôt: 16.02.1995
(51) Int. Cl.: B60N 2/46

(54) **Accoudoir réglable en hauteur pour véhicule automobile**
Höhenverstellbare Armlehne für Kraftfahrzeuge
Height adjustable armrest for automotive vehicles

(30) Priorité: 28.02.1994 FR 9402268
(43) Date de publication de la demande: 30.08.1995
(73) Titulaire: AUTOMOBILES PEUGEOT, 75116 Paris (FR); AUTOMOBILES CITROEN, 92200 Neuilly-sur-Seine (FR)
(72) Inventeur: Marques Dos Santos, Luis Miguel, F-92000 Nanterre (FR)
(74) Mandataire: Seytre, Françoise

(56) Documents cités:
- DE-A- 3 216 931
- DE-A- 3 712 819
- DE-A- 3 930 270
- DE-A- 4 002 243
- SU-A- 448 986
- SU-A- 1 481 110
- US-A- 3 913 901
- US-A- 5 115 723

## Description

La présente invention concerne un accoudoir perfectionné réglable en hauteur pour véhicule automobile (voir par exemple DE-A-3 930 270, correspondant au préambule de la revendication indépendante).

Il est connu de fixer dans l'habitacle d'un véhicule automobile, par exemple sur les portières de ce véhicule, des accoudoirs associés aux sièges avant ou à la banquette arrière du véhicule.

Habituellement, la hauteur des accoudoirs est déterminée en fonction de la morphologie d'un occupant de taille moyenne. La hauteur des accoudoirs n'est donc pas bien adaptée à des occupants dont la morphologie s'écarte notablement de la morphologie moyenne prise en compte pour positionner les accoudoirs.

Pour remédier à cet inconvénient, on a proposé des accoudoirs pour véhicule automobile, du type comportant une partie inférieure fixe, formant corps d'accoudoir, portant une partie supérieure formant appui pour un coude d'utilisateur, mobile en hauteur par rapport à la partie fixe, et des moyens de réglage de la hauteur de la partie mobile par rapport à la partie fixe.
- Le document DE-A-39 30 270 décrit un accoudoir de ce type qui comporte un ressort pour effectuer le réglage de la partie mobile et des moyens électromagnétiques de blocage de cette partie mobile.
- Le document DE-A-37 12 819 décrit un ressort à gaz destiné à être appliqué, notamment, au réglage de parties mobiles d'un siège.

L'invention a pour but de proposer un accoudoir réglable en hauteur simple et facile à monter dans l'habitacle.

A cet effet, l'invention a pour objet un accoudoir pour véhicule automobile du type précité, comprenant des moyens de poussée sollicitant élastiquement la partie mobile dudit accoudoir vers une position écartée en hauteur de sa partie fixe et des moyens de blocage des moyens de poussée précités dans une position sélectionnée de la partie mobile.

Cet accoudoir est caractérisé en ce que les moyens de poussée comportent un piston monté coulissant dans un corps de guidage logé dans le corps d'accoudoir, relié à la partie supérieure de l'accoudoir par une tige et sollicité élastiquement par un ressort de poussée logé dans le corps de guidage, et en ce que les moyens de blocages sont des moyens pneumatiques comportant une chambre étanche de volume variable dans laquelle est logé le ressort de poussée, délimitée par le piston et le corps de guidage et communiquant avec l'air libre par l'intermédiaire d'une ouverture obturable de façon étanche par un clapet.

Suivant d'autres caractéristiques de l'invention:
- le ressort de poussée est interposé entre le piston et le clapet de manière que ce clapet soit sollicité élastiquement par le ressort de poussée en position d'obturation étanche de l'ouverture de communication, le clapet étant relié à un bouton-poussoir faisant saillie à l'extérieur du corps d'accoudoir à travers une ouverture ménagée dans celui-ci, destiné à être actionné à l'encontre de la force élastique du ressort de poussée pour ouvrir le clapet ;
- le clapet a une forme générale de disque, les contours des faces du clapet étant prolongés par des bords axiaux, l'un de ces bords délimitant, avec la face qu'il entoure, un siège pour le ressort de poussée, et l'autre de ces bords formant un bord de jonction étanche avec le bord de l'ouverture de communication;
- le bord de jonction du clapet comporte un joint annulaire d'étanchéité ;
- l'ouverture de communication est ménagée dans le fond du corps de guidage, celui étant porté par un support solidaire du corps d'accoudoir, ajouré de manière à permettre le passage d'air à travers le support et l'ouverture de communication ;
- le support comprend des ailettes venues de matière avec le corps d'accoudoir, s'étendant radialement par rapport à l'axe de l'ouverture de communication, les tranches de ces ailettes délimitant des surfaces d'appui pour le fond du corps de guidage et des surfaces de centrage de ce corps destinées à coopérer avec la paroi latérale du corps de guidage ;
- les ailettes convergent vers un espace axial formant passage pour une tige reliant le bouton-poussoir au clapet ;
- le corps de guidage comporte des pattes de fixation destinées à être fixées par des vis sur des plots solidaires du corps d'accoudoir.

Un exemple de réalisation de l'invention sera décrit ci-dessous en se référant aux dessins annexés dans lesquels :
- la figure 1 est une vue en coupe transversale d'un accoudoir selon l'invention, le clapet étant fermé et la partie mobile de l'accoudoir réglée en position basse ;
- la figure 2 est une vue similaire à la figure 1, le clapet étant ouvert et la partie mobile de l'accoudoir ayant une hauteur maximale ;
- la figure 3 est une vue de dessus de l'accoudoir de la figure 1, à plus petite échelle, la partie mobile de l'accoudoir et le corps de guidage du piston n'étant pas représentés ;
- la figure 4 est une vue en coupe, à échelle agrandie, selon la ligne 4-4 de la figure 3, le corps de guidage du piston étant représenté sur cette figure.

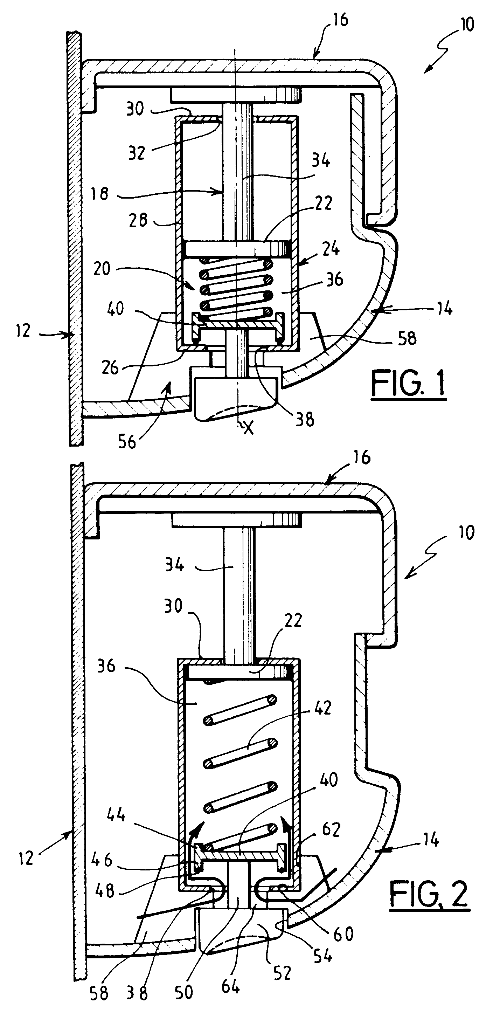

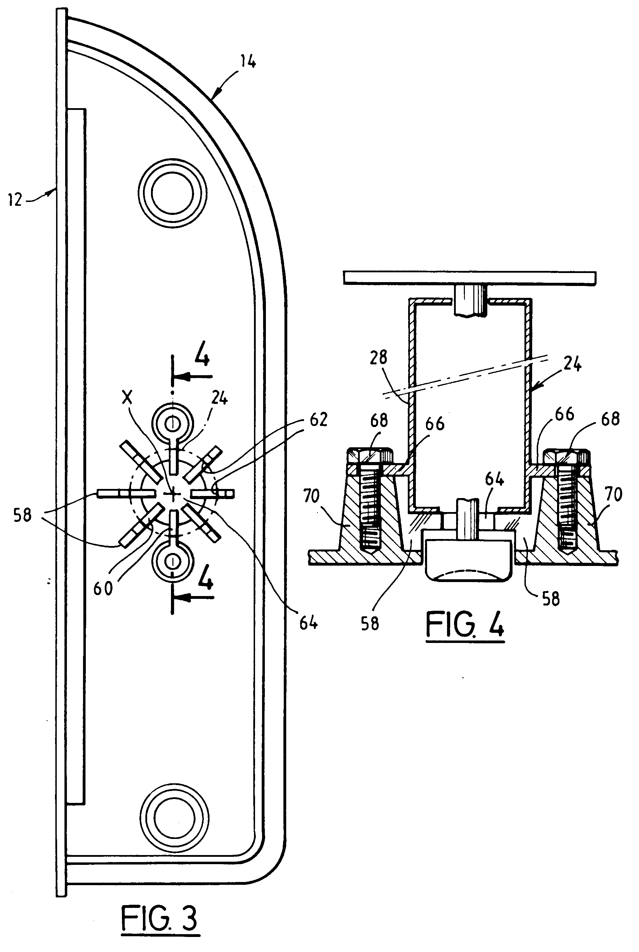

Sur les figures 1 et 2, on a représenté un accoudoir selon l'invention, désigné par la référence générale 10, destiné à être associé à un siège ou une banquette de véhicule automobile.

L'accoudoir 10 est monté par exemple sur la paroi interne 12 d'une portière du véhicule.

L'accoudoir 10 comporte une partie inférieure fixe 14, formant corps d'accoudoir, destinée à être fixée par des moyens connus (non représentés) sur la paroi 12.

L'accoudoir 10 comporte de plus une partie supérieure 16, portée par le corps 14 d'accoudoir, formant appui pour un coude d'utilisateur, mobile en hauteur par rapport à ce corps 14.

De préférence, la partie mobile 16 est recouverte par une matelassure (non représentée) améliorant le confort de l'utilisateur.

La partie mobile 16 est réglable en hauteur par rapport à la partie fixe grâce à des moyens de réglage comprenant des moyens 18 de poussée sollicitant élastiquement la partie mobile 16 vers une position écartée en hauteur du corps 14, et des moyens pneumatiques 20 de blocage des moyens 18 de poussée dans une position sélectionnée de la partie mobile 16.

Les moyens 18 de poussée comprennent un piston 22 monté coulissant suivant un axe X sensiblement vertical, dans un corps 24 de guidage logé dans le corps 14 d'accoudoir.

Le corps 24 de guidage du piston est délimité par une fond 26, une paroi latérale cylindrique 28 et un dessus 30 muni d'une ouverture axiale 32 formant passage pour une tige 34 d'axe X reliant, solidairement entre eux, le piston 22 et la partie supérieure 16 de l'accoudoir.

Le contour du piston 22 est en contact étanche de glissement avec la surface interne de la paroi latérale 28.

Le corps 24 de guidage du piston 22 délimite, entre ce piston 22 et le fond 26, une chambre 36 communiquant avec l'air libre par l'intermédiaire d'une ouverture 38 d'axe X, ménagée dans le fond 26, obturable de façon étanche par un clapet 40.

En position d'obturation du clapet 40, la chambre 36 est étanche et son volume est fonction de la position du piston 22 dans le corps 24 de guidage.

Un ressort de poussée 42, interposé entre le piston 22 et le clapet 40, sollicite élastiquement le piston 22 vers le dessus 30 du corps 24 de guidage et le clapet 40 vers sa position d'obturation.

Le clapet 40 a une forme générale de disque, le contour de ses faces étant prolongé par des bords axiaux 44,46. Un premier bord axial 44 délimite, avec la face qu'il entoure, un siège pour le ressort de poussée 42. Le second bord axial 46 comporte un joint annulaire d'étanchéité 48 de manière à former un bord de jonction étanche avec le bord de l'ouverture de communication 38.

Le clapet 40 est relié par une tige 50 à un bouton-poussoir 52 faisant saillie à l'extérieur du corps 14 d'accoudoir, à travers une ouverture 54 ménagée dans la partie inférieure de celui-ci, destiné à être actionné à l'encontre de la force élastique du ressort de poussée 42 pour ouvrir le clapet 40.

Le fond 26 du corps de guidage est porté par un support 56 ajouré solidaire du corps 14 d'accoudoir, permettant le passage d'air à travers le support et l'ouverture de communication 38.

En se référant notamment à la figure 3, sur laquelle le support 56 est montré plus en détail, on voit que ce dernier comprend des ailettes 58 venues de matière avec le corps 14 d'accoudoir, s'étendant radialement par rapport à l'axe X de l'ouverture de communication 38. Les tranches des ailettes 58 délimitent des surfaces d'appui 60 pour le fond 26 du corps 24 de guidage et des surfaces 62 de centrage de ce corps 24 destinées à coopérer avec la paroi latérale 28 de ce corps 24.

Les ailettes 58 convergent vers un espace axial 64 formant passage pour la tige 50 de liaison du bouton-poussoir 52 au clapet 40.

En se référant aux figures 3 et 4, on voit que le corps 24 de guidage du piston comporte deux pattes radiales de fixation 66, diamétralement opposées, venues de matière avec sa paroi latérale 28, destinées à être fixées par des vis 68 sur deux plots correspondants 70 venus de matière avec le corps 14 d'accoudoir et deux ailettes 58 diamétralement opposées.

La chambre étanche 36 de volume variable et le clapet 40 constituent les moyens pneumatiques 20 de blocage des moyens 18 de poussée, comme on le comprendra plus clairement à la lecture de la description qui va suivre du fonctionnement de l'accoudoir 10.

Pour régler en hauteur la partie mobile 16 de l'accoudoir 10, on appuie sur le bouton-poussoir 52, à l'encontre de la force élastique du ressort de poussée 42. Ceci a pour effet d'ouvrir le clapet 40 et de permettre l'introduction d'air dans la chambre 36, à travers le passage de communication 38, comme cela est représenté sur la figure 2 sur laquelle le trajet de l'air est schématisé par des flèches sans référence. Le piston 22 et la tige 34 se déplacent alors, sous l'effet du ressort de poussée 42, de manière à soulever la partie mobile 16 de l'accoudoir, jusqu'à ce que le piston 22 vienne en butée contre le dessus 30 du corps 24 de guidage. Dans cette position du piston 22, la hauteur de la partie mobile 16 de l'accoudoir est maximale.

Ensuite, tout en appuyant sur le bouton-poussoir 52 de manière à maintenir le clapet 40 ouvert, on appuie sur la partie mobile 16 de l'accoudoir vers le bas, de manière à enfoncer la tige 34 dans le corps 24 de guidage (le piston 22 chassant l'air en excès dans la chambre 36 à travers l'ouverture 38) jusqu'à ce que la partie mobile 16 soit à la hauteur souhaitée. La partie mobile 16 est bloquée dans cette position en relâchant le bouton-poussoir 52 qui est rappelé par le ressort de poussée 42 vers sa position d'obturation de l'ouverture de communication 38.

A la fermeture du clapet 40, la pression dans la chambre étanche 36 s'affaiblit légèrement proportionnellement à un allongement négligeable du ressort de poussée 42, de manière que le piston 22 soit en équilibre sous l'action de la pression atmosphérique régnant à l'extérieur de la chambre 36 et sous les actions opposées à la précédente de la pression régnant dans la chambre 36 (légèrement inférieure à la pression atmosphérique) et de la force élastique du ressort de poussée 42.

La fermeture du clapet 40 bloque donc le piston 22 et la partie mobile 16 de l'accoudoir à une hauteur sélectionnée telle que représentée par exemple sur la figure 1.

L'invention, dont on vient de décrire un exemple de réalisation, permet donc de régler la hauteur d'un accoudoir, ceci avec des moyens très simples, peu coûteux et faciles à monter dans l'habitacle d'un véhicule.

## Revendications

1. Accoudoir pour véhicule automobile, du type comportant une partie inférieure fixe (14), formant corps d'accoudoir, portant une partie supérieure (16) formant appui pour un coude d'utilisateur, mobile en hauteur par rapport à la partie fixe (14), des moyens mécaniques de réglage de la hauteur de la partie mobile (16) par rapport à la partie fixe (14) comprenant des moyens (18) de poussée sollicitant élastiquement la partie mobile (16) vers une position écartée en hauteur de la partie fixe (14) et des moyens de blocage (20) desdits moyens de poussée dans une position sélectionnée de la partie mobile (16),
caractérisé en ce que les moyens (18) de poussée comportent un piston (22) monté coulissant dans un corps (24) de guidage logé dans le corps (14) d'accoudoir, relié à la partie supérieure (16) de l'accoudoir par une tige (34) et sollicité élastiquement par un ressort de poussée (42) logé dans le corps (24) de guidage, et en ce que les moyens de blocages sont des moyens pneumatiques (20) comportant une chambre étanche (36) de volume variable dans laquelle est logé le ressort de poussée (42), délimitée par le piston (22) et le corps (24) de guidage et communiquant avec l'air libre par l'intermédiaire d'une ouverture (38) obturable de façon étanche par un clapet (40).

2. Accoudoir selon la revendication 1,
caractérisé en ce que le ressort de poussée (42) est interposé entre le piston (22) et le clapet (40) de manière que ce clapet (40) soit sollicité élastiquement par le ressort de poussée (42) en position d'obturation étanche de l'ouverture de communication (38), le clapet (40) étant relié à un bouton-poussoir (52) faisant saillie à l'extérieur du corps (14) d'accoudoir à travers une ouverture (54) ménagée dans celui-ci, destiné à être actionné à l'encontre de la force élastique du ressort de poussée (42) pour ouvrir le clapet (40).

3. Accoudoir selon la revendication 1 ou 2,
caractérisé en ce que clapet (40) a une forme générale de disque, les contours des faces dudit clapet étant prolongés par des bords axiaux (44,46), l'un de ces bords (44) délimitant, avec la face qu'il entoure, un siège pour le ressort de poussée (42), et l'autre de ces bords (46) formant un bord de jonction étanche avec le bord de l'ouverture de communication (38).

4. Accoudoir selon la revendication 3,
caractérisé en ce que le bord de jonction (46) du clapet comporte un joint annulaire d'étanchéité (48).

5. Accoudoir selon l'une quelconque des revendications 1 à 4,
caractérisé en ce que l'ouverture de communication (38) est ménagée dans le fond (26) du corps (24) de guidage, celui-ci étant porté par un support (56) solidaire du corps (14) d'accoudoir, ajouré de manière à permettre le passage de l'air à travers ledit support et l'ouverture de communication (38).

6. Accoudoir selon la revendication 5,
caractérisé en ce que le support (56) comprend des ailettes (58) venues de matière avec le corps (14) d'accoudoir, s'étendant radialement par rapport à l'axe (X) de l'ouverture de communication (38), les tranches de ces ailettes (58) délimitant des surfaces d'appui (60) pour le fond (26) du corps (24) de guidage et des surfaces de centrage de ce corps (24) destinées à coopérer avec la paroi latérale (28) du corps (24).

7. Accoudoir selon les revendications 1 et 6 prises ensembles,
caractérisé en ce que les ailettes (58) convergent vers un espace axial (64) formant passage pour une tige (50) reliant le bouton-poussoir (52) au clapet (40).

8. Accoudoir selon l'une quelconque des revendications précédentes,
caractérisé en ce que le corps (24) de guidage comporte des pattes de fixation (66) destinées à être fixées par des vis (68) sur des plots (70) solidaires du corps (14) d'accoudoir.

## Claims

1. Arm-rest for a motor vehicle, of the type comprising a fixed lower part (14), forming the body of the arm-rest, carrying an upper part (16) forming a support for the elbow of the user, movable in terms of height relative to the fixed part (14), mechanical means for adjusting the height of the movable part (16) relative to the fixed part (14) comprising thrust means (18) acting resiliently upon the movable part (16) towards a position offset in height from the fixed part (14) and means (20) for locking said thrust means in a selected position of the movable part (16),
characterised in that the thrust means (18) comprise a piston (22) mounted so as to slide within a guide body (24) housed in the arm-rest body (14), connected to the upper part (16) of the arm-rest by a rod (34) and acted upon resiliently by a thrust spring (42) housed in the guide body (24), and in that the locking means are pneumatic means (20) comprising a sealed chamber (36) of variable volume in which the thrust spring (42) is housed, delimited by the piston (22) and the guide body (24) and communicating with the open air via an opening (38) that can be sealed shut by a valve (40).

2. Arm-rest according to Claim 1,
characterised in that the thrust spring (42) is interposed between the piston (22) and the valve (40) so that this valve (40) is acted upon resiliently by the thrust spring (42) in the position where the communication opening (38) is sealed shut, the valve (40) being connected to a push-button (52) projecting outwards from the arm-rest body (14) through an opening (54) made therein, intended to be actuated in opposition to the resilient force of the thrust spring (42) in order to open the valve (40).

3. Arm-rest according to Claim 1 or 2,
characterised in that the valve (40) is generally disc-shaped, the contours of the faces of said valve being extended by axial edges (44, 46), one of these edges (44) delimiting, together with the face it surrounds, a seat for the thrust spring (42), and the other of these edges (46) forming a sealed junction edge with the edge of the communication opening (38).

4. Arm-rest according to Claim 3,
characterised in that the junction edge (46) of the valve comprises an annular seal (48).

5. Arm-rest according to any one of Claims 1 to 4,
characterised in that the communication opening (38) is made in the bottom (26) of the guide body (24), the latter being carried by a support (56) integral with the body (14) of the arm-rest, perforated so as to allow the passage of air through said support and the communication opening (38).

6. Arm-rest according to Claim 5,
characterised in that the support (56) comprises blades (58) produced in the same material as the arm-rest body (14), extending radially relative to the axis (X) of the communication opening (38), the cut edges of these blades (58) delimiting bearing surfaces (60) for the bottom (26) of this guide body (24) and centring surfaces for this body (24) intended to co-operate with the lateral wall (28) of the body (24).

7. Arm-rest according to Claims 1 and 6 taken together,
characterised in that the blades (58) converge towards an axial space (64) forming a passage for a rod (50) connecting the push-button (52) to the valve (40).

8. Arm-rest according to any one of the preceding claims,
characterised in that the guide body (24) comprises fixing tabs (66) intended to be fixed by screws (68) to contact blocks (70) integral with the arm-rest body (14).

## Patentansprüche

1. Armlehne für ein Kraftfahrzeug von der Art, die einen das Gehäuse der Armlehne bildenden, festen, unteren Teil (14), der einen oberen Teil (16) trägt, welcher eine Auflage für den Ellenbogen eines Benutzers bildet und in Bezug auf den festen Teil (14) höhenverstellbar ist, mechanische Mittel zur Einstellung der Höhe des beweglichen Teils (16) in Bezug auf den festen Teil (14), die Schubmittel (18) enthalten, welche den beweglichen Teil (16) elastisch in eine in der Höhe vom festen Teil (14) entfernte Position bewegen, und Mittel (20) zur Blockierung der Schubmittel in einer gewählten Stellung des beweglichen Teils (16) aufweist,
dadurch gekennzeichnet, daß die Schubmittel (18) einen Kolben (22) aufweisen, der in einem Führungsgehäuse (24) gleitend montiert ist, das sich im Gehäuse (14) der Armlehne befindet, der mit dem oberen Teil (16) der Armlehne über eine Stange (34) verbunden ist und der von einer im Führungsgehäuse (24) angeordneten Schubfeder (42) elastisch beansprucht wird, und daß die Blockiermittel pneumatische Mittel (20) sind, die eine dichte Kammer (36) mit variablen Volumen aufweisen, in der die Schubfeder (42) angeordnet ist und die vom Kolben (22) und vom Führungsgehäuse (24) begrenzt wird und mit der Außenluft über eine Öffnung (38) in Verbindung steht, die durch eine Klappe (40) dicht verschlossen werden kann.

2. Armlehne nach Anspruch 1, dadurch gekennzeichnet, daß die Schubfeder (42) zwischen den Kolben (22) und die Klappe (40) so eingefügt ist, daß diese Klappe (40) von der Schubfeder (42) elastisch in die Position des dichten Verschlusses der Verbindungsöffnung (38) bewegt wird, wobei die Klappe (40) mit einem Drücker (52) verbunden ist, der aus dem Gehäuse (14) der Armlehne durch eine in diesem angebrachte Öffnung (54) vorsteht und gegen die elastische Kraft der Schubfeder (42) betätigt wird, um die Klappe (40) zu öffnen.

3. Armlehne nach Anspruch 1 oder 2, dadurch gekennzeichnet, daß die Klappe (40) eine allgemeine Scheibenform hat, wobei die Umrisse der Flächen der Klappe durch axiale Ränder (44, 46) verlängert werden, wobei einer dieser Ränder (44) mit der Fläche, die er umgibt, einen Sitz für die Schubfeder (42) bildet, und der andere dieser Ränder (46) einen dichten Verbindungsrand mit dem Rand der Verbindungsöffnung (38) bildet.

4. Armlehne nach Anspruch 3, dadurch gekennzeichnet, daß der Verbindungsrand (46) der Klappe eine Ringdichtung (48) aufweist.

5. Armlehne nach einem beliebigen der Ansprüche 1 bis 4, dadurch gekennzeichnet, daß die Verbindungsöffnung (38) im Boden (26) des Führungsgehäuses (24) angebracht ist, das von einem fest mit dem Gehäuse (14) der Armlehne verbundenen Träger (56) gehalten wird, welcher so mit Löchern versehen ist, daß der Durchlaß von Luft durch den Träger und die Verbindungsöffnung (38) ermöglicht wird.

6. Armlehne nach Anspruch 5, dadurch gekennzeichnet, daß der Träger (56) Rippen (58) aus einem Stück mit dem Gehäuse (14) der Armlehne enthält, die sich radial in Bezug auf die Achse (X) der Verbindungsöffnung (38) erstrecken, wobei die Kanten dieser Rippen (58) Auflageflächen (60) für den Boden (26) des Führungsgehäuses (24) und Zentrierflächen für dieses Gehäuse (24) bilden, die mit der Seitenwand (28) des Gehäuses (24) zusammenwirken.

7. Armlehne nach den Ansprüchen 1 und 6 zusammengenommen, dadurch gekennzeichnet, daß die Rippen (58) zu einem axialen Raum (64) hin konvergieren, der einen Durchlaß für eine Stange (50) bildet, die den Drücker (52) mit der Klappe (40) verbindet.

8. Armlehne nach einem beliebigen der vorhergehenden Ansprüche, dadurch gekennzeichnet, daß das Führungsgehäuse (24) Befestigungsklammern (66) besitzt, die durch Schrauben (68) an fest mit dem Gehäuse (14) der Armlehne verbundenen Klötzen (70) befestigt werden sollen.
